Europäisches Patentamt

European Patent Office

Office européen des brevets

(11) Veröffentlichungsnummer: **0 303 132 B1**

(12) **EUROPÄISCHE PATENTSCHRIFT**

(45) Veröffentlichungstag der Patentschrift: **09.12.92**

(21) Anmeldenummer: **88112423.4**

(22) Anmeldetag: **01.08.88**

(51) Int. Cl.⁵: **G01N  21/31**, G01N 33/72

(54) **Hämoglobindetektor.**

(30) Priorität: **10.08.87 DE 3726524**

(43) Veröffentlichungstag der Anmeldung:
**15.02.89 Patentblatt  89/07**

(45) Bekanntmachung des Hinweises auf die
Patenterteilung:
**09.12.92 Patentblatt  92/50**

(84) Benannte Vertragsstaaten:
**DE ES FR GB IT**

(56) Entgegenhaltungen:
**EP-A- 0 152 979        EP-A- 0 244 721
WO-A-81/02633        DE-A- 2 227 127
DE-A- 3 218 102        DE-A- 3 615 259**

(73) Patentinhaber: **Fresenius AG
Gluckensteinweg 5
W-6380 Bad Homburg v.d.H.(DE)**

(72) Erfinder: **Meisberger, Artur
Winterbergerstrasse 61
W-6690 St. Wendel 2(DE)**
Erfinder: **Neumann, Hans-Jürgen, Dr.
Dillingerstrasse 13
W-6690 St. Wendel(DE)**

(74) Vertreter: **Dr. Fuchs, Dr. Luderschmidt
Dipl.-Phys. Seids, Dr. Mehler Patentanwälte
Abraham-Lincoln-Strasse 7
W-6200 Wiesbaden(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine photoelektrische Anordnung zum Feststellen eines Licht spektral unterschiedlich absorbierenden Stoffes in einer Probe, mit zwei alternierend eingeschalteten Lichtquellen unterschiedlicher, auf das Absorptionsmaximum bzw. -minimum des Stoffes abgestimmter Wellenlängen, mit zwei fotoelektrischen Empfängern, die so in bezug auf die Probe angeordnet sind, daß der eine Empfänger (Meßempfänger) Licht empfängt, das die Probe durchstrahlt und der andere Empfänger (Bezugsempfänger) unmittelbar Licht der Lichtquellen empfängt und mit einer elektronischen, den photoelektrischen Empfängern nachgeschalteten sowie die Lichtquellen steuernden Steuer- und Auswerteschaltung zum Feststellen der für den Stoff typischen unterschiedlichen Absorption bei den beiden Wellenlängen.

Eine derartige Anordnung ist aus der PCT-Schrift mit der internationalen Veröffentlichungs-Nr.:

WO 81/02633 bekannt geworden.

Anordnungen der vorstehenden Art dienen beispielsweise zum Feststellen von Hämoglobin bzw. von roten Blutkörperchen in Plasma oder einer anderen Flüssigkeit, auch in verhältnismäßig geringer Konzentration. Typischerweise liegen dann die beiden Wellenlängen im roten bzw. im grünen Spektralbereich.

Im bekannten Fall ist ein Strahlenteiler vorgesehen, der einen Teil des Lichtes beider Lichtquellen direkt auf den einen photoelektrischen Empfänger (Bezugsempfänger) und einen anderen Teil auf die Probe leitet, von wo aus das Licht auf den zweiten Empfänger (Meßempfänger) gelangt.

Die Feststellung des Stoffes erfolgt durch Bestimmung des Absorptionsverhältnisses beim Durchgang des Lichtes durch die Probe in den einzelnen Spektralbereichen. Es ist dazu eine nach dem Abtastprinzip arbeitende, d.h. getaktete elektronische Steuer- und Auswerteschaltung vorgesehen, die wie folgt arbeitet :
Die beiden Lichtquellen werden mit verhältnismäßig hoher Frequenz (1 KHz) alternierend eingeschaltet, d.h. es wird kurzzeitig in den einzelnen Spektralbereichen gemessen. Mit einem ersten Abtastkreis wird die Intensität der einen (ersten) Lichtquelle auf einen vorgegebenen Wert (Bezugswert) eingestellt; das Ausgangssignal des Bezugsempfängers beim Empfang des Lichtes der ersten Lichtquelle dient dabei als Ist-Wertsignal. Mit einem zweiten Abtastkreis wird die Intensität der anderen (zweiten) Lichtquelle so eingestellt, daß die mit dem Meßempfänger (alternierend) in beiden Spektralbereichen erfaßten Lichtmengen gleich sind. Dieser Intensitätswert der zweiten Lichtquelle, gemessen am Bezugsempfänger im zugeordneten Takt, im Verhältnis zum vorgegebenen Bezugswert der Intensität der ersten Lichtquelle, ist ein Maß für das gesuchte Absorptionsverhältnis, das durch einen weiteren Schaltkreis ausgewertet wird.

Diese bekannte Anordnung weist erhebliche Nachteile auf.

Das bekannte Meßprinzip beruht auf einem Vergleich von momentanen Intensitätswerten und ist daher sehr intensitätskritisch. Die Intensität der Lichtquellen ist jedoch, insbesondere bei den modernen Bauelementen, den Leuchtdioden (LED), die bevorzugt bei der vorstehender Anordnung Verwendung finden, stark temperaturabhängig; bereits geringe Temperaturschwankungen beeinflussen die Strahlenausbeute der LEDs erheblich. Obwohl die Intensität der einen Lichtquelle auf einem konstanten Wert gehalten wird, ist mit der bekannten Anordnung keine exakte Messung möglich.

Hinzu kommt, daß der verwendete Strahlenteiler auf die Intensität der Lichtströme unterschiedlich einwirkenden Verschmutzungen ausgesetzt ist, die die Messung ebenfalls verfälschen.

Des weiteren ist aus Angewandte Chemie, Bd. 88 (1976), S. 750-755 das Prinzip der Doppelwellenlängen-Spektrofotometrie als solches bekannt. Die Offenbarung geht jedoch nicht auf die der Erfindung zugrundeliegende Problemstellung ein, geschweige denn liefert sie Hinweise zu deren Lösung.

Die deutsche Offenlegungsschrift 23 63 432 zeigt einen spezifischen Streulichttrübungsmesser mit zwei Lichtquellen und zwei Empfängern, die durch Blenden so getrennt sind, daß jeder Empfänger im durchfallenden Licht sowie vom Streulicht der jeweils anderen Lichtquelle beaufschlagt wird. Aus den vier gemessenen Strahlungsintensitäten kann die Konzentration der Flüssigkeiten in der Probe bestimmt werden. Auch diese optische Vorrichtung hat offensichtlich mit derjenigen gemäß der vorstehend genannten PCT-Schrift keine unmittelbaren Berührungspunkte.

Schließlich beschreibt die deutsche Offenlegungsschrift 32 18 102 ein optisches Gerät zur Strahlungsabsorptionsmessung nach der Einwellen-Spektrofotometrie, mit der eine Kontrollmessung mit Hilfe eines zweiten Empfängers ohne Probe durchgeführt werden kann. Ein Hinweis auf eine Lichtmengenkontrolle von zwei Lichtquellen und die damit zusammenhängende Umschaltung der beiden Lichtquellen kann dieser Druckschrift jedoch nicht entnommen werden.

Der Erfindung liegt die Aufgabe zugrunde, die eingangs bezeichnete Anordnung so auszubilden, daß die Genauigkeit der Messung wesentlich erhöht wird.

Die Lösung dieser Aufgabe gelingt ausgehend von der eingangs bezeichnenden Anordnung gemäß der Erfindung dadurch, daB die Steuer- und Auswerteschaltung einen dem Bezugsempfänger nachgeordneten Lichtschaltkreis zum Bestimmen der von den Lichtquellen ausgesendeten Lichtmengen und Festlegen des Umschaltzeitpunktes für die Lichtquellen beim Erreichen einer vorgegebenen Lichtmenge aufweist.

Durch die erfindungsgemäße Maßnahme, die von den Lichtquellen abgestrahlten Lichtmengen zu normieren, haben Schwankungen in der Intensität der Lichtquellen bzw. sekundärer Lichtquellen (Strahlenteiler) keinen störenden Einfluß auf das Meßergebnis. Die Genauigkeit der Messung wird daher wesentlich erhöht.

Anhand von in den Zeichnungen dargestellten Ausführungsbeispielen werden die Erfindung und deren ausgestaltende Merkmale näher beschrieben.

Es zeigen

Fig. 1 ein Ausführungsbeispiel einer photoelektrischen Anordnung zum Feststellen eines lichtspektral unterschiedlich absorbierenden Stoffes in einer Probe,

Fig. 2 die Spannungsverläufe an zwei typischen Punkten der Schaltungsanordnung nach Fig.1 und

Fig. 3 verschiedene Anordnungsmöglichkeiten der photoelektronischen Elemente in bezug auf die Probe.

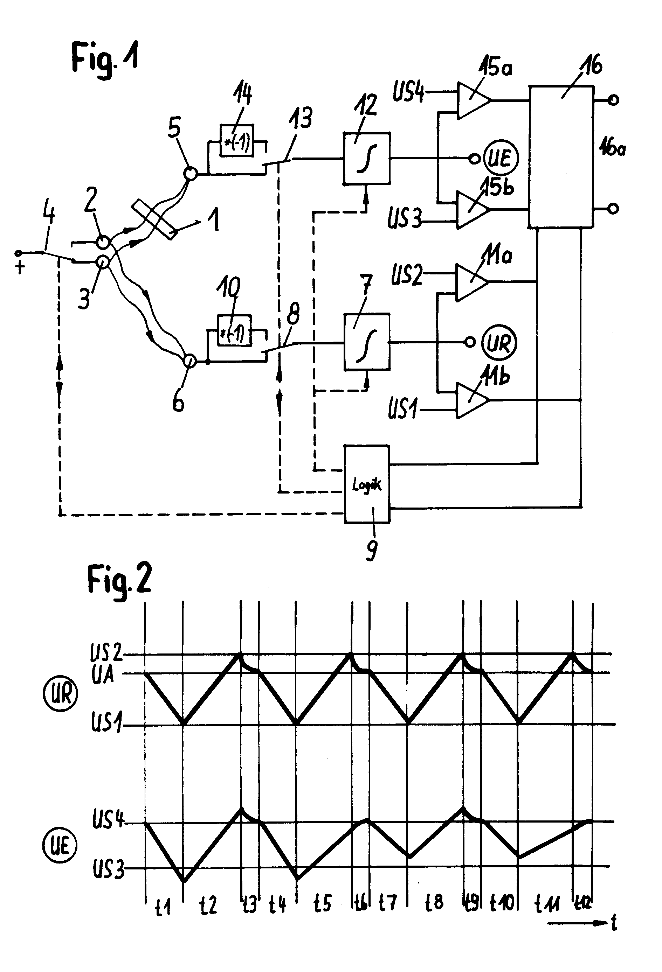

Die Fig.1 zeigt eine photoelektrische Anordnung zum Feststellen eines Licht spektral unterschiedlich absorbierenden Stoffes, der sich in einer Probe 1 befindet. Die Anordnung weist zwei Lichtquellen 2,3 mit unterschiedlichen Wellenlängen auf, die mittels des Umschalters 4 alternierend einschaltbar sind. Die Wellenlängen sind zweckmäßig auf das Absorptionsmaximum bzw -minimum des Stoffes abgestimmt.

Ist der zu untersuchende Stoff z.B. Hämoglobin, beträgt die eine Wellenlänge 565 nm (grünes Licht) und die andere Wellenlänge 635 nm (rotes Licht).

Es sind weiterhin zwei photoelektrische Empfänger 5,6, vorgesehen, die so in bezug auf die Probe 1 ausgerichtet sind, daß der Empfänger 6 - Bezugsempfänger genannt - direkt das Licht beider Lichtquellen empfängt' wogegen der Empfänger 5 - Meßempfänger genannt - das Licht empfängt, das die Probe durchstrahlt hat. Die auf die Empfänger gelangenden Lichtmengen werden in proportionale Spannungswerte umgesetzt. Der Meßempfänger detektiert dabei die von der Probe durch Absorption beeinflußten Lichtmengen. Die zugehörigen Spannungswerte in den einzelnen Spektralbereichen beinhalten Informationen über die Trübung der Probe und über das Vorhandensein von Stoffen, die die unterschiedlichen Lichtfarben unterschiedlich stark beeinflussen.

Die Anordnung zeigt weiterhin eine den photoelektrischen Empfängern nachgeschaltete sowie die Lichtquellen steuernde Steuer- und Auswerteschaltung zum Feststellen der für den Stoff typischerweise unterschiedlichen Absorptionen bei den beiden Wellenlängen, die im folgenden beschrieben werden soll. Die Steuer- und Auswerteschaltung weist zunächst einen den Bezugempfänger 6 nachgeordneten Lichtschaltkreis zum Bestimmen der von den Lichtquellen ausgehenden Lichtmengen und Festlegen des Umschaltzeitpunktes für die Lichtquellen bei Erreichen einer vorgegebenen Lichtmenge auf. Es ist ein Integrator 7 vorgesehen, der über einen Umschalter 8, der synchron mit dem Lichtquellen-Umschalter 4 von einer Steuerlogik 9 gesteuert wird, entweder direkt oder mittelbar über ein Vorzeichen-Umkehrglied 10 an den Ausgang des Bezugempfängers 6 schaltbar ist. Dem Integrator 7 ist eine Schwellwertanordnung, bestehend aus zwei als Komparatoren wirkenden Operationsverstärkern 11a,11b mit unterschiedlichen Schwellwerten US1 und US 2 nachgeschaltet. Die Schwellwerte geben bestimmte Lichtmengen vor, deren Überschreiten von der Steuerlogik erfaßt wird. Das Ausgangssignal UR des Integrators 7 in bezug auf vorgenannte Schwellwerte ist in Fig. 2, Reihe 1, dargestellt.

Der eigentliche Meßschaltkreis der Steuer-und Auswerteanordnung wird durch eine gleichartige Anordnung gebildet; es ist ein weiterer Integrator 12 vorgesehen, der über einen Umschalter 13, der synchron mit den anderen Umschaltern 4, 8 von der Steuerlogik 9 gesteuert wird, entweder direkt oder mittelbar über ein Vorzeichen - Umkehrglied 14 an den Ausgang des Meßempfängers 5 schaltbar ist. Dem Integrator 12 ist eine Schwellwertanordnung, bestehend aus zwei Komparatoren 15a, 15b mit unterschiedlichen Schwellwerten US3 und US 4 nachgeschaltet. Auf die Schwellwertanordnung folgt eine Auswertelogik 16, die die Größe des Integrator-Ausgangssignals UE in bezug auf vorgenannte Schwellwerte - wie in Fig. 2, Reihe 2, für unterschiedliche Verhältnisse dargestellt - erfaßt, um so die unterschiedliche Absorption in den beiden Spektralbereichen als Indikator für das Vorliegen eines bestimmten Stoffes zu detektieren, was durch ein entsprechendes Signal am Ausgang 16a der Auswertelogik angezeigt wird.

Die vorbeschriebene Anordnung arbeitet wie folgt :

Die Schaltung sei zu Beginn in dem dargestellten Zustand, d.h. die Lichtquelle 3 ist eingeschaltet, und die Umschalter 8, 13 liegen am unteren Kontakt direkt an dem jeweiligen Empfänger. Ausgehend von der Ausgangsspannung UA (Fig. 2,1. Reihe) integriert der Integrator 7 im Intervall t1 abwärts bis zur Schwelle US1. Beim Erreichen dieses Schwellwertes schaltet die Logik 9 die Schalter 4, 8 und 13 um. Es leuchtet nunmehr die Lichtquelle 2 und der Integrator 7 integriert im Intervall t2 aufwärts bis zu dem Schwellwert US2, bei dessen Erreichen die Schaltung wieder in den Ausgangszustand gesetzt wird (Zeitintervall t3) und der Ablauf wieder von neuem beginnt.

Mit dem Lichtschaltkreis wird daher für beide Lichtquellen die ausgesendete Lichtmenge auf einen vorgegebenen Wert eingestellt, der, wie in Fig. 2, Reihe 1 zu erkennen ist, in den Spektralbereichen unterschiedlich sein kann. Es wird daher eine Normierung der von den Lichtquellen abgestrahlten Intensität vorgenommen, d.h. der Bezugsempfänger 6 fungiert als Quantenzähler durch Summierung (Integralbildung über die zeitlich eingestrahlte Intensität). Es erfolgt daher eine Festlegung der von den Lichtquellen, den Leuchtdioden, abgestrahlen Quantenmenge, die den Wert $I_0$ der Absorptionsformel gemäß dem Lambert-Beer'schen Gesetzes bildet. Temperaturschwankungen der Lichtquellen machen sich daher nicht störend im Meßergebnis bemerkbar, ebenso wie andere, den Momentanwert der Intensität beeinflussende Störfaktoren.

Der Meßschaltkreis wird periodisch synchron mit dem Lichtschaltkreis umgeschaltet. Über den Umschalter 13 wird daher abwechselnd ein Signal an den Integrator 12 gelegt, das jeweils dem durch die Probe beeinflußten Licht in den beiden Wellenlängenbereichen proportional ist.

Der dem periodischen Einschalten der Lichtquellen korrespondierende Spannungsverlauf UE am Ausgang des Integrators 12 im Meßschaltkreis der Fig.1 ist in Fig. 2 in der 2. Reihe für unterschiedliche Fälle dargestellt. In den Intervallen t1 bis t4 ist das Signal am Meßempfänger 5 nicht von der Probe beeinflußt. Im Intervall t5 wird die eine Lichtfarbe, im Intervall 7 die andere Lichtfarbe abgeschwächt. In den Intervallen t10 und t11 erfolgt in beiden Spektralbereichen eine Absorption.

Im Beispiel Hämoglobin ist die Absorption bei dem Durchstrahlen mit grünem Licht groß, während die Absorption im roten Bereich vergleichsweise gering ist. Durch Vergleich der Absorptionsraten bei beiden Wellenlängen kann daher das Auftreten von Hämoglobin festgestellt werden.

Die Auswertelogik 16 stellt (gestuft) abhängig vom Überschreiten bzw. Nichterreichen der Schwellwerte US3 und US4 die unterschiedliche Absorption in den beiden Spektralbereichen fest und gibt am Ausgang 16a bei Vorliegen einer typischen Kombination ein Signal ab, z.B. die Information über Hämotokrit-oder Hämolysewerte, wenn die Anordnung zur Detektion von Hämoglobin oder roten Blutzellen in Plasma oder einer anderen Flüssigkeit verwendet wird.

Für die Realisierung der Schaltkreise gibt es mannigfaltige, dem Fachmann bekannte Lösungsmöglichkeiten. So kann beispielsweise die Funktion der Umschalter und der Vorzeichen-Umkehrstufen jeweils in den Integrator hineingenommen werden. Es liegt dann ein in der Integrationsrichtung umschaltbarer Integrator vor.

Die Bauelemente, einschließlich der Lichtquellen, sind vorzugsweise moderne elektronische Bauelemente, d.h. die Lichtquellen werden durch Leuchtdioden gebildet.

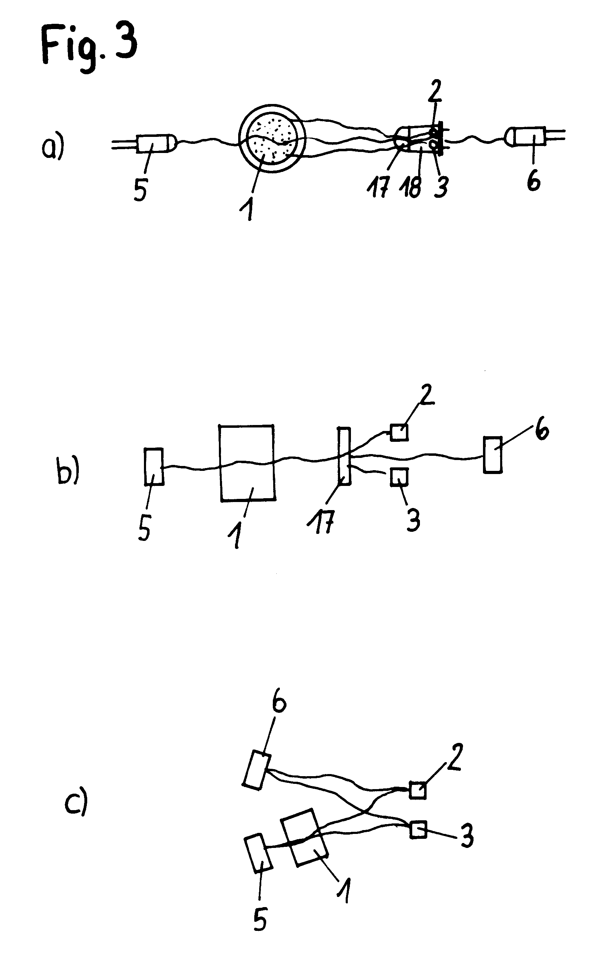

Vorzugsweise findet dabei eine Doppelleuchtdiode gem. Fig. 3a Anwendung. In einem lichtdurchlässigen Gehäuse 18 mit einem diffus streuenden Vorderteil 17 befindet sich eine Lichtquelle 2 für grünes und eine Lichtquelle 3 für rotes Licht. Die Doppelleuchtdiode sendet Licht durch die Probe 1 zum Meßempfänger 5. Dabei wird im diffus streuenden Vorderteil 17 ein Teil des Lichtes zum Bezugsempfänger 6 gestreut. Eine schematische Darstellung dieser Anordnung nach Fig. 3a ist im Figurenteil b dargestellt. Fig. 3c zeigt eine weitere mögliche Anordnung der Meßapparatur, die ohne die Streuscheibe 17 auskommt und die der Anordnung nach Fig. 2 entspricht.

Die Meßapparatur ist vorzugsweise so geschaltet, daß die Lichtquellen und -empfänger, einschließlich der Probe, in einer kompakten Meßzelle untergebracht sind. In erster Näherung kann daher angenommen werden, daß alle Komponenten den gleichen Änderungen hinsichtlich Temperatur, Verschmutzen bzw. Beschlagen, Altern etc. ausgesetzt sind, was sich auf die Meßgenauigkeit mit Vorteil auswirkt.

Werden als photoelektrische Empfänger Phototransistoren verwendet, so liegt - zweckmäßig - eine der Schaltstrecken des Umschalters im Kollektorkreis und die andere im Emitterkreis. Die Schaltstrecken sind abwechselnd entweder mit einem Pol der Versorgungsspannung oder mit dem Eingang des Integrators verbunden.

Die Auswertelogik 16 weist vorteilhaft Grenzwertschalter auf, die bei extremen Verhältnissen der Ausgangsspannungen zu den Schwellwerten, z.B. bei zu starker Trübung, ein Signal erzeugen, mit dem ein Alarm erzeugt oder aber auch die Anordnung abgeschaltet werden kann.

Die Umschaltfrequenz liegt vorzugsweise bei 4 Hz; sie kann jedoch auch höher oder niedriger gewählt werden.

**Patentansprüche**

1. Photoelektrische Anordnung zum Feststellen eines, Licht spektral unterschiedlich absorbierenden Stoffes in einer Probe (1), mit zwei alternierend eingeschalteten Lichtquellen (2,3) unterschiedlicher, auf das Absorptionsmaximum bzw. -minimum des Stoffes abgestimmter Wellenlängen, mit zwei photoelektrischen Empfängern (5,6), die so in bezug auf die Probe angeordnet sind, daß der eine Empfänger (Meßempfänger 5) Licht empfängt, das die Probe durchstrahlt, und der andere Empfänger (Bezugsempfänger 6) unmittelbar Licht der Lichtquellen empfängt, und mit einer elektronischen, den photoelektrischen Empfängern nachgeschalteten sowie die Lichtquellen steuernden Steuer- und Auswerteschaltung zum Feststellen der für den Stoff typischen unterschiedlichen Absorption bei den beiden Wellenlängen, dadurch gekennzeichnet, daß die Steuer- und Auswerteschaltung einen dem Bezugsempfänger (6) nachgeordneten Lichtschaltkreis (7,8,10,11a,11b) zum Bestimmen der von den Lichtquellen ausgesendeten Lichtmengen und Festlegen des Umschaltzeitpunktes für die Lichtquellen beim Erreichen einer vorgegebenen Lichtmenge aufweist.

2. Anordnung nach Anspruch 1, dadurch gekennzeichnet, daß der Lichtschaltkreis einen dem Bezugsempfänger (6) nachgeschalteten Integrator (7) enthält, der mittels einer Steuerlogik (9) synchron mit dem Umschalten im Lichtquellenkreis in der Laufrichtung umschaltbar ist, und dem eine Schwellwertanordnung (11a,11b) mit zwei unterschiedlichen, die Lichtmengen vorgebenden Schwellwerten (US1;US2), deren Überschreiten von der Steuerlogik (9) erfaßbar ist, nachgeschaltet ist, und daß in einem weiteren Meßschaltkreis dem Meßempfänger (5) ein weiterer Integrator (12) nachgeschaltet ist, der ebenfalls synchron mit dem Umschalten im Lichtquellenkreis durch die Steuerlogik (9) in der Integrationsrichtung einschaltbar ist und dem ebenfalls eine Schwellwertanordnung (15a;15b) mit zwei unterschiedlichen Schwellwerten (US3,US4) nachgeschaltet ist, an die eine Auswertelogik (16) angeschaltet ist, die die Größe der Ausgangssignale des zugeordneten Integrators in bezug auf diese Schwellwerte zum Feststellen der unterschiedlichen Absorption in den beiden Spektralbereichen erfaßt.

3. Anordnung nach Anspruch 2, dadurch gekennzeichnet, daß im Eingangskreis jedes Integrators (7,12) ein Umschalter (8,13) und im Ausgang jedes photoelektrischen Empfängers ein Vorzeichen-Umkehrglied (10,14) liegt, und daß der Umschalter jeweils entweder direkt an den Ausgang des Empfängers oder an das Umkehrglied schaltbar ist.

4. Anordnung nach Anspruch 2 oder 3, dadurch gekennzeichnet, daß sowohl der Licht- als auch der Meßschaltkreis und die Lichquellen aus elektronischen Bauelementen aufgebaut sind.

5. Anordnung nach Anspruch 4 mit Leuchtdioden als Lichtquellen, dadurch gekennzeichnet, daß eine Doppelleuchtdiode mit einem lichtdurchlässigen Gehäuse (18) und einem diffus streuenden Vorderteil (17) vorgesehen ist.

6. Anordnung nach einem der Ansprüche 1 bis 5, dadurch gekennzeichnet, daß die Lichtquellen, die photoelektrischen Empfänger und die Probe in einer kompakten Meßzelle untergebracht sind.

7. Anordnung nach einem der Ansprüche 1 bis 6, dadurch gekennzeichnet, daß die vorgegebenen Lichtmengen in beiden Spektralbereichen unterschiedlich sind.

8. Anordnung nach einem der Ansprüche 2 bis 7, dadurch gekennzeichnet, daß die Auswertelogik (16) Grenzwertschalter aufweist, die bei extremen Verhältnissen der Ausgangssignale zu den Schwellwerten ein Alarm- und/oder Abschaltsignal erzeugen..

9. Anordnung nach einem der Ansprüche 1 bis 8, dadurch gekennzeichnet, daß die Lichtquellen-Umschaltfrequenz bei 4 Hz liegt.

10. Anordnung nach Anspruch 3 und 4 mit Phototransistoren als photoelektrische Empfänger, dadurch gekennzeichnet, daß jeweils im Kollektor-und Emitterkreis zwischen den Polen der Vorsorgungsspannung und der zugehörigen Elektrode eine Schaltstrecke des Umschalters liegt, derart, daß jeweils, umschaltbar zwischen den Polen, eine Schaltstrecke an die Versorgungsspannung und die andere Schaltstrecke an den Eingang des Integrators schaltbar sind.

**Claims**

1. A photoelectric arrangement for the determination of a substance spectrally differently absorbing light in a specimen (1) comprising two alternately switched on light sources (2, 3) of different wavelengths matched to the absorption maximum or minimum of the substance, two photoelectric receivers (5, 6) arranged in such a manner with respect to the specimen that the one receiver (measuring receiver 5) receives light which traverses the specimen and the other receiver (reference receiver 6) receives light of the light sources directly and an electronic control and evaluation circuit following the photoelectric receivers and controlling the light sources for the determination of the different absorption typical for the substance at the two wavelengths, characterized in that the control and evaluation circuit comprises a light circuit (7, 8, 10, 11a, 11b) following the reference receiver (6) for determining the light amounts transmitted by the light sources and defining the switchover instant for the light sources on reaching a predetermined amount of light.

2. An arrangement according to claim 1, characterized in that the light circuit contains an integrator (7) which follows the reference receiver (6) and is reversible by means of a control logic (9) synchronously with the switchover in the light source circuit in the running direction and which is followed by a threshold value arrangement (11a, 11b) with two different threshold values (US1, US2) predefining the amounts of light, the exceeding of which is detectable by the control logic (9) and wherein in a further measuring circuit the measuring receiver (5) is followed by a further integrator (12) which is activatable in the integration direction synchronously with with switchover in the light source circuit by the control logic (9) and likewise by a threshold value arrangement (15a; 15b) with two different threshold values (US3; US4) to which an evaluation logic (16) is connected which detects the magnitude of the output signals of the associated integrator with respect to said threshold values for determining the different absorption in the two spectral areas.

3. An arrangement according to claim 2, characterized in that in the input circuit of each integrator (7, 12) there lies a change-over switch (8, 13) and in the output of each photoelectric receiver there lies a sign reversing member (10, 14) and the change-over switch is respectively either able to be switched directly to the output of the receiver or to the reversing member.

4. An arrangment according to claim 2 or 3, characterized in that both the light and the measuring circuit and the light sources are constructed from electronic components.

5. An arrangement according to claim 4 with light-emitting diodes as light sources, characterized in that a double light-emitting diode is provided with a transparent housing (18) and a diffusely dispersing front part (17).

6. An arrangement according to one of claims 1 through 5, characterized in that the light sources, the photoelectric receivers and the specimen are disposed in a compact measuring cell.

7. An arrangement according to one of claims 1 through 6, characterized in that the predetermined light amounts are different in the two spectral areas.

8. An arrangement according to one of claims 2 through 7, characterized in that the evaluation logic (16) comprises limit value switches which generate an alarm and/or switch-off signal at extreme ratios of the output signals to the threshold values.

9. An arrangement according to one of claims 1 through 8, characterized in that the light source changeover frequency lies at 4Hz.

10. An arrangement according to claim 3 and 4, comprising phototransistors as photoelectric receivers, characterized in that in each case in the collector and emitter circuit a contact-break distance of the changeover switch lies between the poles of the supply voltage and the associated electrode in such a manner that respectively, switchable between the poles, the contact-break distance is connectable to the supply voltage and the other contact-breaking distance to the input of the integrator.

**Revendications**

1. Dispositif photoélectrique pour détecter dans un échantillon (1) la présence d'une substance présentant une caractéristique de différence d'absorption de la lumière, comportant deux sources lumineuses (2,3) mise en service en alternance, de longueurs d'ondes différentes, correspondant au maximum d'absorption, respectivement au minimum d'absorption de la substance, avec deux récepteurs photoélectriques (5,6), disposés, par rapport à l'échantillon, de telle façon que le premier récepteur (récepteur de mesure 5) reçoit de la lumière, que l'échantillon irradie, et que l'autre récepteur (récepteur de référence 6) reçoit directement de la lumière provenant des sources lumineuses, et avec un circuit de commande et d'exploitation électronique, mis en circuit en aval des récepteurs photoélectriques et assurant la commande des sources lumineuses, pour détecter la différence d'absorption, typique de la substance, pour les deux longueurs d'ondes, caractérisé en ce que le circuit de commande et d'exploitation présente un circuit de commutation lumineuse (7,8,10,11a,11b), disposé en aval du récepteur de référence (6), destiné à déterminer les quantités de lumière émises par les sources lumineuses et à déterminer le moment de la commutation des sources lumineuses, lorsqu'est atteinte une quantité de lumière déterminée.

2. Dispositif selon la revendication 1, caractérisé en ce que le circuit de commutation lumineuse contient un intégrateur (7), mis en circuit en aval du récepteur de référence (6), dont le sens de parcours est susceptible d'être commuté, au moyen d'une logique de commande (9), de façon synchrone avec la commutation dans le circuit des sources lumineuses, et en aval duquel est mis en circuit un dispositif à valeur de seuil (11a,11b), avec deux valeurs de seuil (US1,US2) différentes, prédéterminant les quantités de lumière, dont le dépassement est susceptible d'être détecté par la logique de commande (9), et en ce que, dans un autre circuit de commutation de mesure est mis en circuit, en aval du récepteur de mesure (5), un autre intégrateur (12), qui est également susceptible, au moyen de la logique de commande (9), d'être mis en circuit dans la direction de l'intégration, de manière synchrone avec la commutation dans le circuit des sources lumineuses, et en aval duquel est également mis en circuit un dispositif à valeurs de seuil (15a;15b) avec deux valeurs de seuil (US3,US4) différentes, auquel est raccordé une logique d'exploitation (16) qui mesure l'intensité des signaux de sortie de l'intégrateur associé, en référence à ces valeurs de seuil, pour déterminer la différence d'absorption dans les deux plages spectrales.

3. Dispositif selon la revendication 2, caractérisé en ce qu'il y a dans le circuit d'entrée de chaque intégrateur (7,12) un commutateur (8,13) et, à la sortie de chaque récepteur photoélectrique un organe d'inversion de signe (10,14), et en ce que le commutateur est chaque fois commutable soit directement à la sortie du récepteur, soit sur l'organe d'inversion.

4. Dispositif selon la revendication 2 ou 3, caractérisé en ce que tant le circuit lumineux qu'également le circuit de connexion de mesure et les sources lumineuses sont construits sous forme de composants électroniques.

5. Dispositif selon la revendication 4, avec des luminodiodes servant de sources lumineuses, caractérisé en ce que sont prévus une luminodiode double avec un boîtier (18) transparent et une partie avant assurant une dispersion diffuse.

6. Dispositif selon l'une des revendications 1 à 5, caractérisé en ce que les sources lumineuses, les récepteurs photoélectriques et l'échantillon sont disposés dans une cellule de mesure compacte.

7. Dispositif selon l'une des revendications 1 à 6, caractérisé en ce que les quantités de lumière prédéterminées sont différentes dans les deux plages spectrales.

8. Dispositif selon l'une des revendications 2 à 7, caractérisé en ce que la logique d'exploitation (16) présente un interrupteur de valeur limite produisant un signal d'alarme et/ou de mise hors service en cas de conditions extrêmes des signaux de sortie par rapport aux valeurs de seuils.

9. Dispositif selon l'une des revendications 1 à 8, caractérisé en ce que la fréquence de commutation des sources lumineuses est de 4 Hz.

10. Dispositif selon les revendications 3 et 4, avec des phototransistors servant de récepteurs photoélectriques, caractérisé en ce que, chaque fois, dans le circuit de collecteur et d'émetteur, est disposé entre les pôles de tension d'alimentation et de l'électrode correspondante un tronçon de circuit du commutateur, de telle façon que chaque fois, de façon commutable entre les pôles, un tronçon de circuit est susceptible d'être commuté à la tension d'alimentation et l'autre tronçon de circuit est susceptible d'être commuté à l'entrée de l'intégrateur.

# Fig. 1

# Fig. 2

# Fig. 3

a)

5    1    17  18  3    6    2

b)

5    1    17    3    2    6

c)

6    2    3    1    5